(19) Europäisches Patentamt
European Patent Office
Office européen des brevets

(11) EP 0 850 965 A1

(12) **EUROPÄISCHE PATENTANMELDUNG**

(43) Veröffentlichungstag:
**01.07.1998 Patentblatt 1998/27**

(51) Int. Cl.$^6$: **C08G 61/08**

(21) Anmeldenummer: **97121707.0**

(22) Anmeldetag: **10.12.1997**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **23.12.1996 DE 19654076**

(71) Anmelder: **BAYER AG**
**51368 Leverkusen (DE)**

(72) Erfinder:
- **Chen, Yun, Dr.**
  **47800 Krefeld (DE)**
- **Dujardin, Ralf, Dr.**
  **47877 Willich (DE)**
- **Bruder, Friedrich-Karl, Dr.**
  **47800 Krefeld (DE)**
- **Rechner, Johann, Dr.**
  **47906 Kempen (DE)**

(54) **Transparente Werkstoffe aus hydrierten Produkten von ringgeöffneten Metathesepolymeren mit polaren Substituenten**

(57) Hydrierungsprodukte der durch ringöffnende Metathesepolymerisation hergestellten Copolymere aus einem cyanosubstituenten Norbornen und mindestens einem multicyclischen Olefine, die 95,5 bis 5Gew.-% des cyanosubstituierten Norbornens einpolymerisiert enthalten und in denen mindestens 60% der zunächst vorhandenen olefinischen Doppelbindungen durch Hydrierung gesättigt sind sowie die Herstellung neuer Hydrierungsprodukte durch Polymerisation in Gegenwart eines Katalysators und gegebenenfalls eines Kettenreglers bei -20°C bis 100°C unter Normaldruck in einem inerten Lösungsmittel und anschließende Hydrierung in Gegenwart eines homogenen oder heterogenen Hydrierkatalysators bei 0°C bis 200°C unter einem Wasserstoffdruck von 2 bis 200 bar in einem inerten Lösungsmittel.

EP 0 850 965 A1

## Beschreibung

Die Erfindung betrifft transparente Werkstoffe aus hydrierten Produkten von ringgeöffneten Metathesepolymeren (ROMP-Polymere) mit polaren Substituenten. Diese Werkstoffe können durch Extrusion oder Spritzguß zu Formkörpern verarbeitet werden und eignen sich besonders als Substrat für optische Datenspeicher wie Compact Disks, Video Disks, wiederbeschreibbare optische Disks.

Als Substrat führ optische Datenspeicher können transparente Kunststoffe wie aromatisches Polycarbonat, Polymethylmethacrylat oder Polystyrol, verwendet werden. Auch Additionscopolymere aus Ethylen und einem Norbornenderivat oder einem Tetracyclododecenderivat sowie hydrierte Produkte von ringgeöffneten Metathesepolymeren aus Norbornen- oder Tetracyclododecen kommen in Frage.

Für sehr hohe Dichten der Datenspeicherung (>10 Gbyte auf einer Scheibe von 120 mm Durchmesser) ist jedoch keines der gängigen Substratmaterialien uneingeschränkt verwendbar, denn dazu sind sehr niedrige Doppelbrechung und Wasseraufnahme, hohe Wärmeformbeständigkeit, sehr gute mechanische Eigenschaften und niedrige Schmelzviskosität gleichzeitig erforderlich. Aromatische Polycarbonate besitzen zwar sehr gute mechanische Eigenschaften und Wärmeformbeständigkeit, aber zu hohe Doppelbrechung und Wasseraufnahme. Polystyrol weist zu hohe Doppelbrechung und zu niedrige Wärmeformbeständigkeit auf. Polymethylmethacrylat hat zu hohe Wasseraufnahme und zu geringe Formbeständigkeit. Additionscopolymere aus Ethylen und einem unpolaren Norbornen- oder Tetracyclododecenderivat besitzen niedrige Doppelbrechung und fast keine Wasserabsorption, aber unzureichende mechanische Eigenschaften. Die bislang bekannten hydrierten ROMP-Polymere haben noch zu hohe Doppelbrechung und bei Verwendung eines polar substituierten (z.B. eine Estergruppen enthaltenden) Monomers zu hohe Wasseraufnahme.

EP 0 317 262 beschreibt nur hydrierte ROMP-Polymere aus Tetracyclododecenderivaten mit einer Estergruppe z.B. 8-Methyl-8-methoxycarbonyltetracyclododecen. Die Estergruppe dient vor allem zur Verbesserung der Haftung der Metallschichte

In DE-A 23 16 087 ist das ROMP-Homopolymer aus 5-Cyanonorbornen und ein Verfahren zu dessen Herstellung beschrieben. Dieses Polymer besitzt sehr gute mechanische Eigenschaften (Elongation at Break vergleichbar mit aromatischen Polycarbonaten). Auch das hydrierte ROMP-Homopolymer aus 5-Cyanonorbornen und die entsprechenden hydrierten Copolymere mit anderen monocyclischen Olefinen oder einigen ausgewählten Norbornenderivaten sind bekannt (JP 63-317 520).

Hydrierte ROMP-Copolymere aus einem cyanosubstituierten Norbornen und mindestens einem anderen ringgespannten multicyclischen Olefin ohne polare Substituenten erfüllen die Anforderungen an optische und mechanische Eigenschaften, Wasseraufnahme und thermische Eigenschaften.

Gegenstand der Erfindung sind die Hydrierungsprodukte der durch ringöffnende Metathesepolymerisation hergestellten Copolymere aus einem cyanosubstituenten Norbornen der Formeln (1) und mindestens einem der multicyclischen Olefine der Formel (2) und (3),

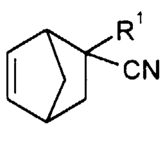

(1)

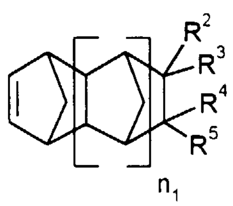

(2)

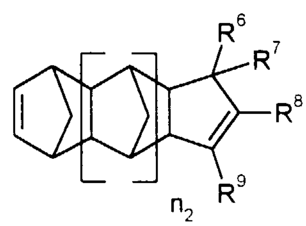

(3)

wobei

| | |
|---|---|
| $R^1$ | H, Methyl, Ethyl oder Cyano bedeutet; |
| $R^2$ bis $R^9$ | unabhängig voneinander für H, $C_1$-$C_6$-Alkyl, $C_1$-$C_6$-Alkenyl, $C_6$-$C_{10}$-Aryl stehen; |
| $R^2$ und $R^3$ | zusammen auch eine Alkylidengruppe und |
| $R^8$ und $R^9$ | zusammen auch den Rest eines Benzolrings bedeuten können; |
| $n_1$ | für 1 oder 2 steht; |

$n_2$ für 0, 1 oder 2 steht,

die 99,5 bis 5 Gew.-% des cyanosubstituierten Norbornens einpolymerisiert enthalten und in denen mindestens 60% der zunächst vorhandenen olefinischen Doppelbindungen durch Hydrierung gesättigt sind.

Bevorzugt bedeuten

$R^1$ H, Methyl;

$R^2$ bis $R^9$ unabhängig voneinander H, Methyl und Phenyl,

$R^2$ und $R^3$ zusammen Ethyliden,

$R^8$ und $R^9$ zusammen den Rest eines Benzolrings,

$n_1$ 1,

$n_2$ 0 oder 1

bei einem Gehalt an polymerisierten cyanosubstituierten Norbornen von 60% bis 20 Gew.-% liegt und Hydrierung von mindestens 95% der olefinischen Doppelbindungen.

Cyanosubstituierte Norbornene der Formel (1) sind bekannt. Beispiele sind:

5-Cyanonorbornen-2,
5-Methyl-5-cyanonorbornen-2,
5,5-Dicyanonorbornen-2,

Die Verbindungen der Formeln (2) und (3) sind ebenfalls bekannt. Beispiele für Formel (2):

1,4,5,8-Dimethano-1,4,4a,5,6,7,8,8a-octahydronaphthalin,
6-Methyl-1,4,5,8-dimethano-1,4,4a,5,6,7,8,8a-octahydronaphthalin,
6-Ethyl-1,4,5,8-dimethano-1,4,4a,5,6,7,8,8a-octahydronaphthalin,
6-Ethyliden-1,4,5,8-dimethano-1,4,4a,5,6,7,8,8a-octahydronaphthalin,
6-Phenyl-1,4,5,8-dimethano-1,4,4a,5,6,7,8,8a-octahydronaphthalin,
6,7-Dimethyl-1,4,5,8-dimethano-1,4,4a,5,6,7,8,8a-octahydronaphthalin

und für Formel (3):

Dicyclopentadien,
Tricyclopentadien,
Tetracyclopentadien,
1,4-Methano-1,4,4a,9a-tetrahydrofluoren.

Die Erfindung betrifft auch ein Verfahren zur Herstellung der Hydrierungsprodukte, das dadurch gekennzeichnet ist, daß man

1. das cyanosubstituierte Norbornen der Formel (I) und mindestens eines der multicyclischen Olefine der Formeln (2) und (3) in Gegenwart eines Katalysators und gegebenenfalls in Gegenwart eines Kettenreglers (zur Einstellung des Molekulargewichts) bei -20°C bis 100°C, vorzugsweise 0°C bis 50°C unter Normaldruck in einem inerten Lösungsmittel einer ringöffnenden Metathesepolymerisation unterwirft, und anschließend

2. das erhaltene Polymerisat in Gegenwart eines homogenen oder heterogenen Hydrierkatalysators bei 0°C bis $200^0$C, vorzugsweise 35°C bis 150°C unter einem Wasserstoffdruck von 2 bis 200 bar, vorzugsweise von 10 bis 50 bar in einem inerten Lösungsmittel hydriert.

Das Polymerisat kann nach bekannten Methoden isoliert werden, beispielsweise durch Fällung mit niederen aliphatischen Alkoholen aus der Polymerlösung oder durch Eintragen der Polymerlösung in heißes Wasser (Strippen).

Die Isolierung des Polymerisats vor der Hydrierung ist jedoch nicht unbedingt notwendig. Die Reaktionsmischung kann bevorzugt direkt der Hydrierung unterworfen werden. Daher wird bevorzugt das gleiche Lösungsmittel für die

Polymerisation und für die Hydrierung verwendet.

Geeignete Kettenregler für die ringöffnende Metathesepolymerisation sind offenkettige Verbindungen mit Kohlenstoff-Kohlenstoff-Doppelbindungen. Beispiele sind $C_1$-$C_{12}$-Alkene, Allylacetat, Allylalkylether, Styrol.

Geeignete Katalysatoren für die ringöffnende Polymerisation werden aus

a) Verbindungen der Übergangsmetalle Wolfram, Rhenium, Tantal, Molybdän,

b) metallorganischen Verbindungen der Metalle der Gruppen (Ia) bis (IVa) des Periodensystems (D.F. Shriver, P.W. Atkins, C.H. Langford, Anorganische Chemie, VCH Verlagsgesellschaft, 1992) und

c) gegebenenfalls Cokatalysatoren zusammengesetzt.

a) ist bevorzugt $TaBr_5$, $TaCl_5$, $ReCl_5$, $MoOCl_3$, $MoCl_5$, $WCl_5$, $WCl_6$, $WOCl_4$, besonders bevorzugt sind Wolframhalogenide.

b) ist bevorzugt ein Aluminiumtrialkyl, Aluminiumdialkylhalogenid, Aluminiumalkyldihalogenid, Magnesiumalkylhalogenid, Lithiumalkyl oder Zinntetraalkyl, wobei bevorzugte Alkylgruppen 1 bis 8 C-Atome enthalten und Chlor und Brom als Halogen bevorzugt ist. Beispiele sind: LiBu, $MgEt_2$, $AlEt_2$, $AlEtCl_2$, $AlEt_2Cl$, $SnEt_4$, $SnBu_4$. Bevorzugt sind aluminiumorganische Verbindungen und zinnorganische Verbindungen.

Die Wirksamkeit der metallorganischen Mischkatalysatoren kann durch Zusatz von Cokatalysatoren (c) noch gesteigert werden. Als Cokatalysatoren kommen in Betracht:

Epoxide der allgemeinen Formel (4)

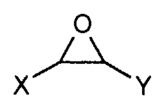

(4)

worin

X und Y für H, Alkyl, Aryl, Aralkyl, $-CH_2$-Hal (Hal = F, Cl, Br, I) stehen;

oder Acetale der allgemeinen Formel (5)

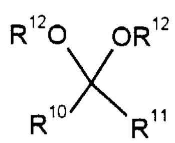

(5)

worin

$R^{10}$ und $R^{11}$ unabhängig voneinander Wasserstoff; einen gegebenenfalls halogenierten Alkyl-, Aryl- oder Alkylarylrest bedeuten und

$R^{12}$ einen gegebenenfalls halogenhaltigen Alkylrest bedeutet;

oder Halogenalkohole der allgemeinen Formel (6)

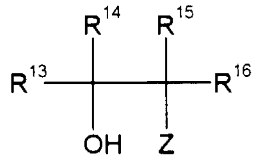

(6)

worin

Z ein Halogenatom (F, Cl, Br) ist,

$R^{13}$ und $R^{14}$ gleich oder verschieden sein können und Wasserstoff einen Alkyl-, Aryl- oder Aralkylrest,

$R^{15}$ und $R^{16}$ gleich oder verschieden sein können und F, Cl, Br, I, H, Alkyl, Aryl oder Aralkyl bedeuten und worin

$R^{14}$ und $R^{15}$ zusammen und mit den Kohlenstoffatomen, an denen sie stehen, einen 5- oder mehrgliedrigen Kohlenstoffring bilden können;

oder Ether der allgemeinen Formel (7)

$$X_1\text{-}(CH_2)_n\text{-}O\text{-}(CH_2)_n\text{-}X_2 \qquad (7)$$

worin

$X_1$ und $X_2$ = H, F, Cl, Br, I und

n = 1 bis 10 sein kann;

oder Keton der allgemeinen Formel (8)

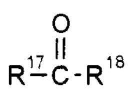

(8)

worin

$R^{17}$ und $R^{18}$ gleich oder verschieden sein können und gegebenenfalls halogenhaltiges Alkyl bedeuten.

In den Cokatalysatoren sind Alkylgruppen bevorzugt solche mit 1 bis 6 C-Atomen, Arylreste solche mit 6 bis 10 C-Atomen und Aralkylreste eine Kombination aus beiden.

Beispiele für diese Cokatalysatoren sind Ethylenoxid, Propylenoxid, 2-Chlorethanol, 2-Bromethanol, 2-Fluorethanol, 2-Iodethanol, 2-Chlorcyclohexanol 2-Chlorcyclopentanol, o-, m-, p-Chlorphenol, Di-2-chlorethylformaldehyde, Diethylether, Dibutylether, Di-(chlorethyl)-ether, Acetaldehyd-diethylacetal, Aceton und Butanon.

Das bevorzugte Molverhältnis der Katalysatorkomponente (a) : (b) bzw (a) : (c) beträgt 1:0,5 bis 1:15 bzw. 1:0,3 bis 1:10.

Die Menge an Katalysatorkomponente (a) ist bevorzugt 0,05 bis 2 mmol, bevorzugt 0,1 bis 0,5 mmol auf 100 g Monomere.

In einer bevorzugten Ausführungsform der Polymerisation wird zuerst Katalysatorkomponente (a), bevorzugt ein Halogenid mit dem Cokatalysator (c) in 0,05 bis 0,5 molarer Lösung in Kohlenwasserstoffen oder halogenierten Kohlenwasserstoffen umgesetzt. Man erhält dann in organischen Lösungsmitteln leicht lösliche und beständige Umsetzungsprodukte. Als Lösungsmittel für das Verfahren kommen aliphatische, cycloaliphatische und aromatische Kohlenwasserstoffe - gegebenenfalls halogeniert - in Betracht, wie z.B. Toluol, Methylenchlorid, Hexan und Cyclohexan. Bevorzugt wird Toluol.

Die Polymerisation wird erfindungsgemäß im allgemeinen wie folgt durchgeführt: Die Monomere werden gewöhnlich in einem inerten Lösungsmittel unter Ausschluß von Wasser, H-aciden Verbindungen und Sauerstoff gelöst. Die Konzentration der Monomeren kann 5 bis 60 Gew.-% betragen, bevorzugt sind Konzentrationen von 5 bis 30 Gew.-%. Bei diskontinuierlicher Versuchsführung wird bevorzugt zunächst die Verbindung des Übergangselements (a) bzw. das Umsetzungsprodukt aus (a) und (c) und danach die metallorganische Verbindung (b) zugegeben. Die Reihenfolge ist jedoch nicht kritisch. Die Reaktion läuft ohne größere Wärmetönung ab. Die Reaktionszeit kann wenige Minuten bis einige Stunden betragen.

Als Lösungsmittel für die Lösungspolymerisation kommen aliphatische, cycloaliphatische und aromatische Kohlenwasserstoffe - gegebenenfalls halogeniert - in Betracht, wie z.B. Toluol, Methylenchlorid, Hexan und Cyclohexan. Bevorzugt wird Toluol.

Die Hydrierung der durch ringöffnende Metathesepolymerisation hergestellten Polymere ist möglich durch an sich bekannte Verfahren, die auch für gewöhnliche Olefinhydrierung einsetzbar sind.

Geeignete heterogene Hydrierkatalysatoren sind z.B. Palladium, Platin, Nickel, Rhodium oder Ruthenium, auf Aktivkohle, Aluminiumoxid, Kieselgel, Bariumsulfat oder Calciumcarbonat als Träger.

Bei der Hydrierung ist homogene Katalyse bevorzugt. Geeignete homogene Hydrierkatalysatoren sind z.B. Rutheniumphosphinkomplex, die beschrieben sind in Inoranic Synthesis, Vol. 15, Seite 45; J. Chem. Sic., Dalton Trans., (1973) 1912; Rec. Trav. Pays Bas, 91 (11972) 591; J. Chem. Soc., Dalton Trans., (1973) 478; Adv. in Chem. Ser., 196 (1982) 145; Inorg. Chim, Acta., 32 (1979) 19 und J. Inorg. and Nuc. Chem., 36 (1974) 2279. Beispiele sind $RuHCl(CO)(PPh_3)_3$, $RuHCl(CO)(P(C_4H_9)_3)_3$, $RuH_2(CO)(PPh_3)_3$, $RuH_2(CO)_2(PPh_3)_2$, $RuH_2(NO)(PPh_3)_3$, $RuHCl(CO)(PCyclohexyl_3)_2$, $RuHCl(CO)(PCyclohexyl_3)$, $RuHCl(CO)_2(PCyclohexyl_3)_2$.

Die obengenannten organischen Lösungsmittel für die Polymerisation können in der Regel auch für die Hydrierung verwendet werden. Man benutzt im allgemeinen 5 bis 60 gew.-%ige Lösungen, vorzugsweise 5 bis 30 gew.-%ige bezogen auf Polymer. Die Menge an homogenem Katalysator beträgt 0,001 bis 2 Gew.-%, vorzugsweise 0,01 bis 1 Gew.-% bezogen auf Polymer. Die Hydrierungszeit kann 0,5 bis 24 Stunden betragen.

Die Polymerisation und die Hydrierung können sowohl diskontinuierlich als auch kontinuierlich, z.B. in einer Rührkesselreihe oder in einer Reaktionsschnecke durchgeführt werden.

Die erfindungsgemäßen hydrierten ROMP-Polymere können durch Zusatz von Antioxidanten, z.B. von sterisch gehindertem Phenol gegen Alterung geschützt werden.

Den erfindungsgemäß hydrierten ROMP-Polymeren können auch andere Additive wie z.B. UV-Absorber, Färbemittel, Pigmente etc., abhängig von der beabsichtigten Anwendung, beigegeben werden.

Die erfindungsgemäßen hydrierten ROMP-Polymere weisen ein mittleres Molekulargewicht (Gewichtsmittel) - ermittelt durch Gelpermeationschromatographie mit Polystyrol als Kalibrierung - von 5.000 bis 1.000.000, vorzugsweise 5.000 bis 50.000 auf Das Molekulargewicht ist von Verfahrensparametern, insbesondere von der Katalysatorzusammensetzung Monomer/Katalysator-Verhältnis und Monomer/Kettenregler-Verhältnis abhängig und läßt sich durch ändern dieser Parameter auf gewünschte Werte einstellen.

Die erfindungsgemäßen hydrierten ROMP-Polymere weisen eine Glastemperatur - ermittelt durch Differentialthermoanalyse - von 50°C bis 300°C, vorzugsweise von 120°C bis 180°C auf. Die Glastemperatur ist insbesondere von der Katalysatorzusammensetzung, Monomer/Comonomer-Verhältnis abhängig und läßt sich durch ändern dieser Parameter auf gewünschte Werte einstellen.

Doppelbrechung in Spritzgußkörpern, eine der wichtigsten optischen Eigenschaften, läßt sich als Materialeigenschaft durch die rheooptische Konstante beschreiben. Diese kann positiv oder negativ sein. Je größer ihr absoluter Wert ist, um so größer ist die Doppelbrechung in spritzgegossenen Formteilen. Das Meßverfahren der rheooptischen Konstante ist bekannt (EP-A-0 621 297, Seite 4, Zeile 36 bis 45). Die dazu benötigten planparallelen 150 bis 1000-Mikrometer-Probekörper können durch Schmelzpressen oder Filmgießen hergestellt werden.

Die erfindungsgemäßen hydrierten ROMP-Polymere haben eine rheooptische Konstante von höchstens 2,0 $GPa^{-1}$. Die rheooptische Konstante ist inbesondere von der Art der Monomeren und dem Monomer/Comonomer-Verhältnis abhängig und läßt sich durch ändern dieser Parameter beeinflussen.

Spuren von Elementen wie Wolfram, Aluminium, Chlor, Ruthenium und Phosphor etc., die aus den Polymerisations- oder Hydrierkatalysatoren stammen, lassen sich durch Kontaktierung der Hydrierungsprodukte mit der wäßrigen Lösung einer organischen oder anorganischen Säure wie Ameisensäure, Essigsäure, Propionsäure und Salzsäure, oder mit einem aktiven Festabsorber wie Kieselgel, Kieselgur, Aktivkohle oder Aluminiumoxid entfernen.

Die erfindungsgemäßen hydrierten ROMP-Polymere besitzen aufgrund ihrer Struktur besonders gute optische Eigenschaften (hohe Transparenz und niedrige Doppelbrechung), gute mechanische Eigenschaften und ausreichende Resistenz gegen Feuchtigkeit. Sie sind amorph und gut verarbeitbar. Sie lassen sich durch übliche Verfahren (wie Spritzguß und Extrusion) zu optischen Produkten (wie Linsen, Substrate für Compact Disks) verarbeiten.

## Beispiele

### Beispiel 1

Ringgeöffnetes Copolymer aus 5-Cyanonorbornen und Tetracyclododecan (Molverhältnis 60:40)

(1) Katalysatorherstellung

Unter Stickstoff wird 3,97 g (10 mmol) Wolfram(VI)chlorid in 70 ml Toluol gelöst. In diese Lösung wird eine Lösung von 2,36 g (20 mmol) Acetaldehyd-diethylacetal in 30 ml Toluol bei 20 bis 25°C unter Rühren eingetropft. Der dabei gebildete Chlorwasserstoff wird durch einen trockenen Stickstoffstrom innerhalb von 3 Stunden ausgeblasen. Die Wolframkonzentration in der erhaltenen Lösung beträgt ca. 0,1 mol/l.

(2) Polymerisation

Einer Mischung von 4,76 g (40 mmol) 5-Cyanonorbornen, 2 ml (1 mmol) einer 0,5 M Lösung von Allylethylether in Methylenchlorid und 80 ml Tetrahydrofuran setzt man 3,3 ml (0,33 mmol) der unter (1) erhaltenen Katalysatorlösung und 1,3 ml (2,3 mmol) einer 1,8 M Lösung von Diethylaluminiumchlorid in Toluol zu. Anschließend wird innerhalb von 2 Stunden eine Lösung von 9,6 g (60 mmol) Tetracyclododecen in 40 ml Tetrahydrofuran zugetropft. Man rührt das Reaktionsgemisch nach Zugabe-Ende entweder noch drei Stunden und stoppt dann die Polymerisation mit 1 ml Methanol. Die erhaltene viskose Lösung enthält ca. 12 g Polymer pro 100 ml und kann direkt für die Hydrierung eingesetzt werden. Um das Polymer zu isolieren, wird die Lösung in Methanol eingetropft. Das ausgefallene Produkt wird abgesaugt und unter Vakuum getrocknet. Man erhält 13,7 g Polymer mit einem mittleren Molgewicht (Gewichtsmittel $\overline{M}_w$) von 30.800, einen mittleren Molgewicht (Zahlenmittel $\overline{M}_n$) von 12.600 (gemessen durch Gelpermeationschromatographie mit Polystyrol-Kalibrierung) und einer Glastemperatur von 178°C (gemessen durch Differentialthermoanalyse).

### Beispiel 2

Hydrierung des Copolymers gemäß Beispiel 1

Die in Beispiel 1 erhaltene Polymer-Lösung (ca. 120 ml) wird in einem Hochdruckautoklaven mit einem Magnetrührer vorgelegt. Der Autoklav wird mit Stickstoff inertisiert. Man setzt 50 mg $RuHCl(CO)(P(C_6H_5)_3)_3$ hinzu und leitet Wasserstoff ein. Unter Rühren wird die Temperatur auf 120°C erhöht. Der Druck bei dieser Temperatur beträgt 50 bar. Das Reaktionsgemisch wird bei dieser Temperatur 10 Stunden gerührt. Man kühlt auf Raumtemperatur ab und tropft die Lösung in Methanol ein. Nach Absaugen und Trocknen erhält man 12,5 g Polymer. $^1H$- und $^{13}C$-NMR bestätigt die vollständige Hydrierung (>99%) der olefinischen Doppelbindungen und die Erhaltung der Cyanogruppen.

Zur Reinigung löst man das Rohprodukt in Chlorbenzol, versetzt die Lösung mit 20 g Kieselgur, rührt die Suspension 30 min. unter Rückfluß, saugt warm ab und fällt das Polymer wieder in Methanol aus.

Das Hydrierungsprodukt wird in Toluol gelöst (Konzentration 10 Gew.-%) und zu einem Naßfilm von 500 μm Dicke gegossen. Der Film wird unter Vakuum getrocknet. An diesem Film wird die Glastemperatur zu 141°C und die rheooptische Konstante zu 1,7 $GPa^{-1}$ bestimmt.

### Beispiel 3

Ringgeöffnetes Copolymer aus 5-Cyanonorbornen und Tetracyclododecen (Molverhältnis 80:20)

Es wird vorgegangen wie in Beispiel 1, wobei - im Unterschied zu Beispiel 1 - 2,38 g (20 mmol) 5-Cyanonorbornen und 12,8 g (80 mmol) Tetracyclododecen copolymerisiert werden. Die daraus erhältliche viskose Lösung enthält ca. 13 g Polymer pro 100 ml und kann direkt für die Hydrierung eingesetzt werden. Um das Polymer zu isolieren, wird die Lösung in Methanol eingetropft. Das ausgefallene Produkt wird abgesaugt und unter Vakuum getrocknet. Man erhält 14,5 g Polymer mit einem mittleren Molgewicht (Gewichtsmittel $\overline{M}_w$) von 29.600, einem mittleren Molgewicht (Zahlenmittel $\overline{M}_n$) von 202.000 und einer Glastemperatur von 189°C.

### Beispiel 4

Hydrierung des Copolymers gemäß Beispiel 3

Die in Beispiel 3 erhaltene Lösung (ca. 120 ml) wird wie in Beispiel 2 bei 120°C und unter 50 bar Wasserstoffdruck

10 Stunden hydriert. Man erhält 13 g Polymer. $^{1}H$- und $^{13}C$-NMR bestätigt die vollständige Hydrierung (>99%) der olefinischen Doppelbindungen und die Erhaltung der Cyanogruppen.

**Beispiel 5**

Ringgeöffnetes Copolymer aus 5-Cyanonorbornen und Dicyclopentadien (Molverhältnis 80:20)

(1) Katalysatorherstellung

Unter Stickstoff wird 3,97 g (10 mmol) Wolfram(VI)chlorid in 70 ml Toluol gelöst. In diese Lösung wird eine Lösung von 3,48 g (60 mmol) Aceton in 30 ml Toluol bei 20 bis 25°C unter Rühren eingetropft. Der dabei gebildete Chlorwasserstoff wird durch einen trockenen Stickstoffstrom innerhalb von 3 Stunden ausgeblasen. Die Wolframkonzentration in der erhaltenen Lösung beträgt ca. 0,1 mol/l.

(2) Polymerisation

Es wird vorgegangen wie in Beispiel 1, wobei - in Unterschied zu Beispiel 1 - 2,38 g (20 mmol) 5-Cyanonorbornen und 10,56 g (80 mmol) Dicyclopentadien mit der in Stufe (1) hergestellten Katalysatorlösung copolymerisiert werden. Die erhaltene viskose Lösung enthält ca. 8 g Polymer pro 100 ml und kann direkt für die Hydrierung eingesetzt werden. Um das Polymer zu isolieren, wird die Lösung in Methanol eingetropft. Das ausgefallene Produkt wird abgesaugt und unter Vakuum getrocknet. Man erhält 10,4 g Polymer.

**Beispiel 6**

Hydrierung des Copolymers gemäß Beispiel 5

Die in Beispiel 5 erhaltene Lösung (ca. 120 ml) wird wie in Beispiel 2 bei 120°C und unter 50 bar Wasserstoffdruck 10 Stunden hydriert. Man erhält 8,7 g Polymer $^{1}H$- und $^{13}C$-NMR bestätigt die vollständige Hydrierung (>99%) der olefinischen Doppelbindungen und die Erhaltung der Cyanogruppen.

**Beispiel 7**

Ringgeöffnetes Copolymer aus 5-Cyanonorbornen und 7-Ethyliden-tetracyclododecen (Molverhältnis 80:20)

Es wird vorgegangen wie in Beispiel 1, wobei - in Unterschied zu Beispiel 1 - (20 mmol) 5-Cyanonorbornen und 14,88 g (80 mmol) 7-Ethyliden-tetracyclododecen copolymerisiert werden. Die erhaltene viskose Lösung enthält ca. 12 g Polymer pro 100 ml und kann direkt für die Hydrierung eingesetzt werden. Um das Polymer zu isolieren, wird die Lösung in Methanol eingetropft. Das ausgefallene Produkt wird abgesaugt und unter Vakuum getrocknet. Man erhält 15 g Polymer.

**Beispiel 8**

Hydrierung des Copolymers gemäß Beispiel 7

Die in Beispiel 7 erhaltene Lösung (ca. 120 ml) wird wie in Beispiel 2 bei 120°C und unter 50 bar-Wasserstoffdruck 10 Stunden hydriert. Man erhält 11,4 g Polymer. $^{1}H$- und $^{13}C$-NMR bestätigt die vollständige Hydrierung (>99%) der olefinischen Doppelbindungen und die Erhaltung der Cyanogruppen.

**Vergleichsbeispiel 1**

Hydrierungsprodukt des ringgeöffneten Polymers von 5-Cyanonorbornen

(1) Einer Mischung von 11.9 g (100 mmol) 5-Cyanonorbornen, 2 ml (1 mmol) einer 0,5 M Lösung von Allylethylether in Methylenchlorid und 80 ml Methylenchlorid setzt man 3,3 ml (0,33 mmol) der in Stufe (1) des Beispiels 1 erhaltenen Katalysatorlösung und 1,3 ml (2,3 mmol) einer 1,8 M Lösung von Diethylaluminiumchlorid in Toluol zu. Man rührt das Reaktionsgemisch nach Zugabeende noch 12 Stunden und stoppt die Polymerisation mit 1 ml Methanol. Die erhaltene Lösung wird in Methanol eingetropft. Das ausgefallene Produkt wird abgesaugt und unter Vakuum getrocknet. Man erhält 10,5 g Polymer mit einem mittleren Molgewicht (Gewichtsmittel $\overline{M}_w$) von 323.000,

einem mittleren Molgewicht (Zahlenmittel $\overline{M}_n$) von 43.300 und einer Glastemperatur von 119°C.

(2) 10 g des in (1) erhaltenen Produktes werden in einem Hochdruckautoklaven in 100 ml Tetrahydrofuran gelöst. Der Autoklav wird mit Stickstoff inertisiert. Man setzt 17 mg $RuHCl(CO)(PCyh_3)_2$ (CyH = Cyclohexyl) hinzu und hydriert die Mischung bei 140°C unter 50 bar Wasserstoffdruck 6 Stunden lang. Man kühlt auf Raumtemperatur ab und tropft die Lösung in Methanol ein. Nach Absaugen und Trocknen erhält man 9,6 g Polymer. $^1H$- und $^{13}C$-NMR bestätigt die vollständige Hydrierung (>99%) der olefinischen Doppelbindungen und die Erhaltung der Cyanogruppen. Ein 150µm dicker Film des Hydrierungsproduktes wird durch Schmelzpressen hergestellt. In diesem Film wird eine Glastemperatur von 69°C und eine rheooptische Konstante von 1,2 $GPa^{-1}$ gemessen.

**Vergleichsbeispiel 2**

Hydrierungsprodukt des ringgeöffneten Polymers von Tetracyclododecen

(1) Einer Mischung von 19,2 kg (120 mmol) Tetracyclododecen, 2 ml (1 mmol) einer 0,5 M Lösung von 1-Hexen in Toluol und 110 ml Toluol setzt man in dieser Reihenfolge 3,8 ml (3,8 mmol) einer 1 M Lösung von Triethylaluminium, 1,4 ml (10 mmol) Triethylamin und 1,0 ml (1,0 mmol) einer 1 M Lösung von Titantetrachlorid in Toluol zu. Man rührt das Reaktionsgemisch noch 3 Stunden und stoppt die Polymerisation mit 1 ml Methanol. Die erhaltene viskose Lösung wird in Methanol eingetropft. Das ausgefallene Produkt wird abgesaugt und unter Vakuum getrocknet. Man erhält 19 g Polymer mit einem mittleren Molgewicht (Gewichtsmittel $\overline{M}_w$) von 23.300, einem mittleren Molgewicht (Zahlenmittel $\overline{M}_n$) von 9.100 und einer Glastemperatur von 222°C.

(2) 19 g des in (1) erhaltenen Produktes werden in einem Hochdruckautoklaven in 200 ml Toluol gelöst. Der Autoklav wird mit Stickstoff inertisiert. Man setzt 50 mg $RuH_2(CO)(PPh_3)_3$ hinzu und hydriert die Mischung bei 120°C unter 50 bar Wasserstoffdruck 12 Stunden lang. Man kühlt auf Raumtemperatur ab und tropft die Lösung in Methanol ein. Nach Absaugen und Trocknen erhält man 18,8 g Polymer mit einer Glastemperatur von 167°C. $^1H$- und $^{13}$-NMR bestätigt die vollständige Hydrierung (>99%) der olefinischen Doppelbindungen.

**Vergleichsbeispiel 3**

Hydrierungsprodukt des ringgeöffneten Polymers aus 7-Ethylidentetracyclododecen

(1) Es wird vorgegangen wie in Vergleichsbeispiel (2.1), wobei - in Unterschied zu Vergleichsbeispiel 2 - 22,3 g (120 mmol) 7-Ethyliden-tetracyclododecen homopolymerisiert wird. Die dabei erhaltene Lösung wird in Methanol eingetropft. Das ausgefallene Produkt wird abgesaugt und unter Vakuum getrocknet. Man erhält 22 g Polymer m it einem mittleren Molgewicht (Gewichtsmittel $\overline{M}_w$) von 79.700, einem mittleren Molgewicht (Zahlenmittel $\overline{M}_n$) von 35.100.

(2) 22 g des in (1) erhaltenen Produktes werden in einem Hochdruckautoklaven in 200 ml Toluol gelöst. Der Autoklav wird mit Stickstoff inertisiert. Man setzt 50 mg $RuH_2(CO)(PPh_3)_3$ hinzu und hydriert die Mischung bei 120°C unter 50 bar Wasserstoffdruck 12 Stunden lang. Man kühlt auf Raumtemperatur ab und tropft die Lösung in Methanol ein. Nach Absaugen und Trocknen erhält man 21,4 g Polymer. $^1H$- und $^{13}C$-NMR bestätigt die vollständige Hydrierung (>99%) der olefinischen Doppelbindungen. Das Hydrierungsprodukt wird in Toluol gelöst (Konzentration beträgt 10 Gew.-%) und zu einem Naßfilm von 500 µm Dicke gegossen. Der Film wird unter Vakuum getrocknet. An diesem Film wird eine Glastemperatur von 145°C und eine rheooptische Konstante von 2,1 $GPa^{-1}$ gemessen.

**Vergleichsbeispiel 4**

Polycarbonat aus 2,2-Bis-(4-hydroxyphenyl)propan

Ein 150 µm dicker Film von Polycarbonat auf Basis von 2,2-Bis-(4-hydroxyphenyl)propan (Makrolon CD2005, Bayer AG) wird durch Schmelzpressen hergestellt. An diesem Film wird eine Glastemperatur von 142°C und eine rheooptische Konstante von 5,4 $GPa^{-1}$ gemessen.

**Patentansprüche**

1. Hydrierungsprodukte der durch ringöffnende Metathesepolymerisation hergestellten Copolymere aus einem cyanosubstituenten Norbornen der Formel (1) und mindestens einem der multicyclischen Olefine der Formeln (2) und (3),

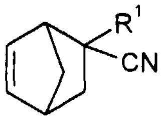
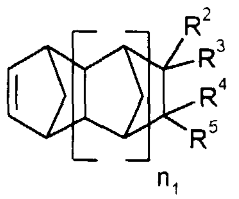
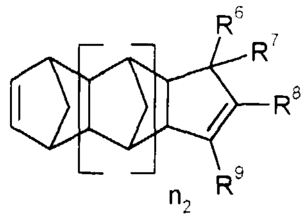

(1) (2) (3)

wobei

| | |
|---|---|
| $R^1$ | H, Methyl, Ethyl oder Cyano bedeutet; |
| $R^2$ bis $R^9$ | unabhängig voneinander für H, $C_1$-$C_6$-Alkyl, $C_1$-$C_6$-Alkenyl, $C_6$-$C_{10}$-Aryl stehen; |
| $R^2$ und $R^3$ | zusammen auch eine Alkylidengruppe und |
| $R^8$ und $R^9$ | zusammen auch den Rest eines Benzolrings bedeuten können; |
| $n_1$ | für 1 oder 2 steht; |
| $n_2$ | für 0, 1 oder 2 steht, |

die 99,5 bis 5 Gew.-% des cyanosubstituierten Norbornens einpolymerisiert enthalten und in denen mindestens 60% der zunächst vorhandenen olefinischen Doppelbindungen durch Hydrierung gesättigt sind.

**2.** Hydrierungsprodukte gemäß Anspruch 1, worin bedeuten

| | |
|---|---|
| $R^1$ | H, Methyl; |
| $R^2$ bis $R^9$ | unabhängig voneinander H, Methyl und Phenyl, |
| $R^2$ und $R^3$ | zusammen Ethyliden, |
| $R^8$ und $R^9$ | zusammen den Rest eines Benzolrings, |
| $n_1$ | 1, |
| $n_2$ | 0 oder 1 |

bei einem Gehalt an einpolymerisierten cyanosubstituierten Norbornen von 60% bis 20 Gew.-% und Hydrierung von mindestens 95% der olefinischen Doppelbindungen.

**3.** Verfahren zur Herstellung der Hydrierungsprodukte gemäß Anspruch 1, dadurch gekennzeichnet, daß man

1. das cyanosubstituierte Norbornen der Formel (1) und m indestens eines der multicyclischen Olefine der Formeln (2) und (3), in Gegenwart eines Katalysators und gegebenenfalls in Gegenwart eines Kettenreglers bei -20°C bis 100°C unter Normaldruck in einem inerten Lösungsmittel einer ringöffnenden Metathesepolymerisation unterwirft, und anschließend

2. das erhaltene Polymerisat in Gegenwart eines homogenen oder heterogenen Hydrierkatalysators bei 0°C bis 200°C unter einem Wasserstoffdruck von 2 bis 200 bar in einem inerten Lösungsmittel hydriert

**4.** Verwendung der Hydrierungsprodukte nach Anspruch 1 als Substrat für optische Datenspeicher.

Europäisches Patentamt

# EUROPÄISCHER RECHERCHENBERICHT

Nummer der Anmeldung
EP 97 12 1707

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | PATENT ABSTRACTS OF JAPAN<br>vol. 009, no. 180 (C-293), 25.Juli 1985<br>& JP 60 049051 A (NIPPON ZEON KK), 18.März 1985,<br>* Zusammenfassung *<br>--- | 1-4 | C08G61/08 |
| X | PATENT ABSTRACTS OF JAPAN<br>vol. 014, no. 306 (C-0735), 3.Juli 1990<br>& JP 02 103226 A (TOSOH CORP), 16.April 1990,<br>* Zusammenfassung *<br>--- | 1-4 | |
| A | DATABASE WPI<br>Section Ch, Week 9246<br>Derwent Publications Ltd., London, GB;<br>Class A17, AN 92-377251<br>XP002059566<br>& JP 04 277 519 A (NIPPON ZEON KK) ,<br>2.Oktober 1992<br>* Zusammenfassung *<br>--- | 1 | |
| A | PATENT ABSTRACTS OF JAPAN<br>vol. 014, no. 106 (C-0694), 27.Februar 1990<br>& JP 01 311120 A (JAPAN SYNTHETIC RUBBER CO LTD), 15.Dezember 1989,<br>* Zusammenfassung *<br>--- | 1 | RECHERCHIERTE SACHGEBIETE (Int.Cl.6)<br>C08G |
| A | GB 1 546 775 A (ICI LTD)<br>* Seite 2, Zeile 64 - Seite 3, Zeile 2; Ansprüche *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 19.März 1998 | Deraedt, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)